Europäisches Patentamt

European Patent Office

Office européen des brevets

(11) Publication number: **0 159 077**
**B1**

# (12) EUROPEAN PATENT SPECIFICATION

(45) Date of publication of patent specification: **09.11.88**

(51) Int. Cl.⁴: **A 22 C 21/00**

(21) Application number: **85200469.6**

(22) Date of filing: **25.03.85**

(54) Method and device for severing a body part of slaughtered poultry.

(30) Priority: **09.04.84 NL 8401125**

(43) Date of publication of application:
**23.10.85 Bulletin 85/43**

(45) Publication of the grant of the patent:
**09.11.88 Bulletin 88/45**

(84) Designated Contracting States:
**AT BE CH DE FR GB IT LI LU NL SE**

(56) References cited:
**GB-A- 454 006**
**GB-A- 974 052**
**NL-A-7 904 779**
**US-A-2 807 046**
**US-A-3 643 293**
**US-A-4 091 503**

(73) Proprietor: **STORK PMT B.V.**
**43a Wim de Körverstraat**
**NL-5831 AN Boxmeer (NL)**

(72) Inventor: **Van der Eerden, Henricus F.J.M.**
**De Blauwverver 74**
**NL-5283 XW Boxtel (NL)**

(74) Representative: **Timmers, Cornelis Herman**
**Johannes et al**
**EXTERPATENT P.O. Box 90649**
**NL-2509 LP 's-Gravenhage (NL)**

Courier Press, Leamington Spa, England.

## Description

The invention relates to a method for severing a body part of slaughtered poultry in which use is made of a cutting element provided with a cutting edge, and co-operating with a moving positioning member coupled thereto for positioning the desired cutting place relative to the cutting edge.

Such a method is known from US—A—14091503. This publication discloses a method for breaking, stretching and subsequently cutting the necks of slaughtered poultry. Each poultry carcass is advanced hanging by the feet and the neck thereof is gripped by a positioning member of the device and subsequently stretched and cut-off. This known method thus requires a complicated device and nevertheless does not ensure that the body part to be severed is indeed severed at the correct position, particularly when birds of different size have to be processed.

The device as known from US—A—4091503 is complicated and costly. It comprises two separate, intercoupled, rotating members: the first one being provided with positioning members, arranged along its circumference and the second one with cutting elements with radially extending cutting edges. Yet even with this structure it is not ensured that the severing is done at the desired correct position.

The invention aims to provide a method and a device for carrying out the method, in which these disadvantages are overcome. To this end in the method according to the invention the positioning member is coupled directly to the cutting element and thus moves through a similar path.

In this method the cutting element can execute a movement to overtake the bird while the method can also be carried out such that the parts to be separated from one another execute no movement or virtually no movement during the severing operation.

A device for carrying out this method and comprising a cutting element provided with a cutting edge, coupled to a positioning member for positioning the bird part relative to the cutting edge before the portion is cut through by the cutting edge, is characterised, according to the invention, in that the positioning member is connected directly to the cutting element and thus moves through a similar path.

According to the invention, the cutting operation is thus carried out by a cutting element which moves relative to the bird and is coupled to a positioning member such that during the movement of the entire arrangement relative to the bird the latter is brought into the correct position relative to the cutting edge by the positioning member.

Poultry is frequently moved forward, on a conveyor track, to be subjected to processing operations. According to the invention, a cutting element is then employed which has a movement component in the direction of transport and of which the velocity during cutting is greater than that of the part to be cut.

An advantageous embodiment according to the invention is characterised by a V-shaped cutting element, the cutting edges of which are located on either side of and near the apex and having non-cutting positioning edges which are located in the direction of movement of the cutting element in front of the latter.

The invention is illustrated with reference to the drawing.

Fig. 1 is a top view of a first possible embodiment according to the invention;

Fig. 2 is a side view thereof.

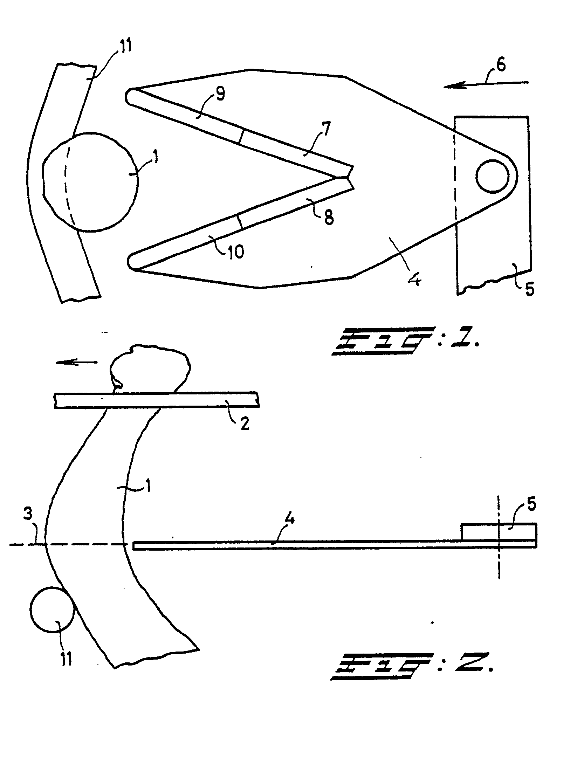

Reference numeral 1 in Fig. 1 and 2 indicates the leg of a bird hanging on the conveyor track 2, which leg has to be cut through at the position shown with the broken lines 3. For this purpose use is made according to the invention of a cutting knife 4 which is fastened to a pivot arm 5 and is driven in the direction of arrow 6; the cutting knife has two cutting edges 7, 8 which, in the direction of movement 6, are preceded by two non-cutting positioning edges 9, 10. As a result of the presence of these positioning edges 9, 10 the leg 1 which is held back by the support 11 can be positioned relative to the cutting edges 7, 8 whereby the cut is made at the desired position.

## Claims

1. Method for severing a body part of slaughtered poultry in which use is made of a cutting element (4) provided with a cutting edge (7, 8) and co-operating with a moving positioning member (9, 10) coupled thereto for positioning the desired cutting place relative to the cutting edge, characterised in that the positioning member is coupled directly to the cutting element and thus moves through a similar path.

2. Method according to claim 1, characterised in that the cutting element executes a movement to overtake the bird (9).

3. Method according to claim 2, characterised in that the parts to be separated from one another execute no movement or virtually no movement during the severing operation.

4. Device for carrying out the method according to claim 1—3, comprising a cutting element (4) provided with a cutting edge, coupled to a positioning member (9, 10) for positioning the bird (1) part relative to the cutting edge (7, 8) before the portion is cut through by the cutting edge, characterised in that the positioning member (9, 10) is connected directly to the cutting element (4) and thus moves through a similar path.

5. Device according to claim 4, in particular for processing poultry which is moved forward on a conveyor track (2), to be subjected to at least one processing operation, characterised in that the cutting element (4) has a movement component (6) in the direction of transport and of which the velocity during cutting is greater than that of the part to be cut.

6. Device according to claim 4—5, characterised by a V-shaped cutting element (4), the cutting edges (7, 8) of which are located on either side of and near the apex and having noncutting positioning edges (9, 10) which are located in the direction of movement (6) of the cutting element (4) in front of the latter.

**Patentansprüche**

1. Verfahren zum Abtrennen eines Körperteils von geschlachtetem Geflügel, bei welchem von einem Schniedelement (4) Verwendung gemacht wird, das mit einer Schniedkante (7, 8) versehen ist und das mit einem sich bewegenden Positionierglied (9, 10) zusammenwirkt, das daran angekoppelt ist, um die gewünschte Schneidstelle relativ zur Schneidkante zu positionieren, dadurch gekennzeichnet, daß das Positionierglied direkt mit dem Schneidelement gekoppelt ist und sich somit auf einer gleichartigen Bahn bewegt.

2. Verfahren nach Anspruch 1, dadurch gekennzeichnet, daß das Schneidelement eine Bewegung ausführt, um den Vogel (1) zu überholen.

3. Verfahren nach Anspruch 2, dadurch gekennzeichnet, daß die voneinander zu trennenden Teile während des Abtrennvorgangs keine Bewegung oder virtuell keine Bewegung ausführen.

4. Vorrichtung zur Durchführung des Verfahrens nach Anspruch 1 bis 3 mit einem Schneidelement (4), das mit einer Schneidkante versehen ist und mit einem Positionierglied (9, 10) gekoppelt ist, um den Teil des Vogels (1) relativ bezüglich der Schneidkante (7, 8) zu positionieren, ehe der Teil durch die Schneidkante abgeschnitten wird, dadurch gekennzeichnet, daß das Positionierglied (9, 10) direkt mit dem Schneidelement (4) verbunden ist und sich somit auf einer gleichartigen Bahn bewegt.

5. Vorrichtung nach Anspruch 4, insbesondere zum Verarbeiten von Geflügel, das auf einer Förderbahn (2) vorwärtsbewegt wird, damit es wenigstens einem Bearbeitungsvorgang ausgesetzt wird, dadurch gekennzeichnet, daß das Schneidelement (4) eine Bewegungskomponente (6) in Transportrichtung hat und daß seine Geschwindigkeit während des Schneidens größer als die des abzuschneidenden Teils ist.

6. Vorrichtung nach Anspruch 4—5, gekennzeichnet durch ein V-förmiges Schneidelement (4), dessen Schneidkanten (7, 8) auf jeder Seite der Spitze und in der Nähe davon angeordnet sind und das nichtschneidende Positionierkanten (9, 10) aufweist, die in Richtung der Bewegung (6) des Schneidelements (4) vor letzterem angeordnet sind.

**Revendications**

1. Procédé de découpage d'une partie du corps de volailles abattues dans lequel on utilise une pièce coupante (4) munie d'un bord coupant (7, 8), et coopérant avec une pièce de positionnement mobile (9, 10) couplée à celle-ci pour positionner l'endroit de coupe désiré par rapport au bord coupant, caractérisé en ce que la pièce de positionnement est directement reliée à la pièce coupante et, ainsi, se déplace selon une trajectoire semblable.

2. Procédé selon la revendication 1, caractérisé en ce que la pièce coupante effectue un mouvement pour attraper la volaille (1).

3. Procédé selon la revendication 2, caractérisé en ce que les parties à séparer l'une de l'autre n'effectuent aucun mouvement ou pratiquement aucun mouvement pendant l'opération de découpe.

4. Dispositif pour mettre en oeuvre le procédé selon l'une des revendications 1 à 3, comprenant une pièce coupante (4) munie d'un bord couplant, couplée à une pièce de positionnement (9, 10) pour positionner la partie de volaille (1) par rapport aux bords coupants (7, 8) avant que la partie ne soit coupée par le bord coupant, caractérisé en ce que la pièce de positionement (9, 10) est relié directement à la pièce coupante (4) et, ainsi, se déplace selon une trajectoire semblable.

5. Dispositif selon la revendication 4, en particulier pour volaille qui avance sur un rail de convoyage (2) pour lui faire subir au moins une opération de traitement, caractérisé en ce que la pièce coupante (4) a une composante de mouvement (6) dans le sens du convoyage et une vitesse, durant la coupe qui est plus grande que celle de la partie à couper.

6. Dispositif selon l'une des revendications 4 et 5, caractérisé par une pièce coupante (4) en V dont les bords coupants (7, 8) sont situés de chaque côté et près de la pointe du V, avec des bords de positionnement non coupants (9, 10) qui sont situés, dans le sens du mouvement (6) de la pièce coupante (4), devant ce dernier.

*Fig: 1.*

*Fig: 2.*